# EUROPÄISCHE PATENTSCHRIFT

(11) **EP 4 194 263 B1**
(45) Veröffentlichungstag und Bekanntmachung des Hinweises auf die Patenterteilung: **15.01.2025**
(21) Anmeldenummer: 22205208.6
(22) Anmeldetag: 03.11.2022
(51) Int. Cl.: B60P 1/48, B60P 1/64, B65D 90/14, B65D 90/18

(54) **BEHÄLTERWECHSELEINRICHTUNG UND EIN HIERFÜR BESTIMMTER BEHÄLTER ODER LADEGUTTRÄGER**
CONTAINER CHANGING DEVICE AND CONTAINER OR LOAD CARRIER INTENDED THEREFOR
DISPOSITIF DE CHANGEMENT DE RÉCIPIENTS ET RÉCIPIENT OU SUPPORT DE CHARGEMENT DESTINÉS À CELUI-CI

(30) Priorität: 10.12.2021 DE 102021132685
(43) Veröffentlichungstag der Anmeldung: 14.06.2023
(73) Patentinhaber: Begemann, Carl-Ludwig, 26409 Wittmund (DE)
(72) Erfinder: Begemann, Carl-Ludwig, 26409 Wittmund (DE)
(74) Vertreter: Scheffler, Jörg

(56) Entgegenhaltungen:
- GB-A- 1 303 585
- JP-A- 2005 138 741
- JP-A- 2011 230 371

## Beschreibung

Die Erfindung betrifft eine für ein selbstfahrendes oder gezogenes Transportfahrzeug, insbesondere für ein Wechselladerfahrzeug, bestimmte, auch als Abrolltransporteinrichtung bezeichnete Behälterwechseleinrichtung zum Auf- und Abladen eines Behälters mit einer Bodenfläche, die eine Bodenauflage mit einer Standfläche aufweist, wobei die Behälterwechseleinrichtung zumindest eine beim Auf- und Abladen den Behälter oder Ladegutträger zumindest zeitweise stützende Rolle sowie einen um eine insbesondere horizontale Schwenkachse schwenkbaren Tragrahmen für den Behälter oder den Ladegutträger aufweist, an dem ein Schlitten mit einem um eine Greifarmschwenkachse schwenkbar gelagerten beweglichen Greifarm translatorisch beweglich angeordnet ist, der mit einem Kupplungsmittel zur vorübergehenden Fixierung des Greifarms an einem Haltemittel des Behälter oder des Ladegutträgers verbunden ist, nach dem Oberbegriff des Anspruchs 1. Weiterhin betrifft die Erfindung einen für eine solche Abrolltransporteinrichtung bestimmten Behälter oder Ladegutträger nach dem Oberbegriff des Anspruchs 12.

Gattungsgemäße Behälterwechseleinrichtungen werden als Hakenabrolltransporteinrichtungen vielfach eingesetzt und zählen somit bereits aufgrund offenkundiger Vorbenutzung zum Stand der Technik. Hierbei handelt es sich allgemein um Transporteinrichtungen, durch die Behälter oder Ladegutträger über eine Abrollbewegung von einem entsprechenden Wechselladerfahrzeug auf dem Boden abgesetzt oder vom Boden auf das Transportfahrzeug aufgeladen werden können. Durch die Behälterwechselvorrichtung kann der Behälter auf dem Transportfahrzeug auf- und abgeladen, durch Abkippen entleert und auf dem Fahrzeug gesichert werden. Abrollbehälter für derartige Einrichtungen sind beispielsweise auch in der DIN 30 722 beschrieben.

Zum Auf- und Abladen wird der Tragrahmen durch eine Antriebseinrichtung des Fahrzeugs um eine am hinteren Ende des Fahrzeugrahmens befindliche Schwenkachse aus einer horizontalen, auf dem Fahrzeugrahmen aufliegenden Behältertransportposition in eine etwa vertikale Ladeposition aufgerichtet. Der Schlitten wird mittels eines Schlittenantriebs teleskopartig in Längsrichtung des Tragrahmens verfahren. In einer anderen Variante ist der Schwenkarm über den Drehpunkt vor- und zurückschwenkbar.

Sobald der Schlitten teleskopartig eingefahren ist und das rückwärtige Ende bzw. den Heckbereich erreicht hat, wird der am unteren Ende angelenkte Greifarm zum Auf- und Abladen des Behälters in einem Kreisbogen nach unten geschwenkt, sodass sein freies Ende bzw. das daran angeordnete hakenförmige Kupplungsmittel den Behälter an seinem bügelförmigen Haltemittel fixieren kann.

Beim Aufladen des Behälters wird zuerst der Greifarm an dem Teleskopschlitten verschwenkt und der Schlitten entlang des Tragrahmens nach oben und nach hinten verfahren. Der Schlitten wird zusammen mit dem Tragrahmen zurück in die horizontale Lage auf den Fahrzeugrahmen geschwenkt, sodass der gekoppelte Behälter mit seiner Unterseite ganz aufliegt. Schließlich wird der Schlitten in der horizontalen Lage mit dem am Greifarm angekuppelten Behälter nach vorn verfahren, bis der Behälter einen vorderen Anschlag in der Behältertransportposition erreicht hat und mit dem Transportfahrzeug verriegelt ist.

Erfindungsgemäß sollen unter der Bezeichnung Behälter neben offenen, geschlossenen oder verschließbaren Behältern zur Lagerung und zum Transport von Gütern, beispielsweise Frachtbehälter, auch Behälter mit festen Einrichtungen, insbesondere Aggregaten, sowie auch ganz allgemein Container, beispielsweise auch Wohncontainer, verstanden werden, soweit diese aufgrund ihrer Größe geeignet und bestimmt sind, mit entsprechenden Wechselladerfahrzeugen transportiert zu werden, einschließlich solcher Behälter, die als Ladegutträger in der Bauform eines Abrollrahmens zur Montage von Behältern, beispielsweise Seecontainern oder Haltemitteln für Güter ausgeführt sind.

Übliche Behälterformen umfassen beispielsweise neben Standard-Abrollbehältern auch Abrollbehälter mit Rollplane, Mittelrolle, Klappe, Schiebedeckel oder Drehdeckel, abklappbarer oder abnehmbarer Bordwand sowie Feuerwehr- und Bundeswehrbehälter.

Bei der DE 26 17 638 A1 ist ein in einem vom Kipprahmen geführter Schlitten vorgesehen, wobei der Schwenkantrieb aus einer Kolbenzylindereinheit besteht.

Die DE 38 09 871 A1 bezieht sich auf eine Wechsellader-Einrichtung mit zwei lösbar verbundenen, jeweils einen Behälter aufnehmende Tragteilen. Die Behälter werden zunächst gemeinsam mit der Wechsellader-Einrichtung vom Fahrzeug abgelassen und anschließend bedarfsweise getrennt.

Bei einem Containerfahrzeug zum Transport von Containern mit einer Containerwechselvorrichtung gemäß der EP 1 364 829 A2 hat das Kupplungsmittel eine an einem Greifarm gelagerte Aufnahmeklaue mit zwei voneinander beabstandeten Haken zum Aufnehmen eines Kettenbocks.

Die EP 0 564 403 A1 betrifft eine Vorrichtung zum Auf- und Abladen eines Ladungsträgers an einem Fahrzeug mit einem an einer Ladebrücke angelenkten Kipprahmen, in dessen Ebene eine endlose Zugkette zum Auf- und Abladen des Ladungsträgers gespannt ist. An dem Kipprahmen ist ein Schlitten verschiebbar gelagert, der in beiden Bewegungsrichtungen über die Zugkette antreibbar ist, und an dem ein schwenkbarer Greifarm angelenkt ist, wobei ein Ladungsträger wahlweise mit einem Haken oder mit einer Klaue verbunden wird.

Die DE 10 2015 016 679 A1 betrifft eine Abrolltransporteinrichtung zur Verbesserung der Rangierfähigkeit, bei der anstelle des Haltebügels ein Schwenkgelenk vorhanden ist, sodass die Greifarmanbindung gegenüber der Verbindungsstruktur und damit gegenüber der Bodenstruktur um eine Drehachse drehbar ist.

Grundsätzlich führt bei allen Behälterwechseleinrichtungen ein steiler Neigungswinkel des Behälters dazu, dass das Ladegut in dem Behälter nach hinten rutscht und vor allem Schütt-und Sperrgut über die rückseitige Behälterwandung herausfallen kann. Zudem verändert sich der Schwerpunkt des Behälters beim Aufladen und Abladen, sodass die Stabilität des Wechselladerfahrzeugs im Straßenverkehr verringert sein kann.

Um diesem Problem zu begegnen, schlägt die DE 34 07 568 A1 einen Behälter mit einer sich unterhalb der Bodenfläche erstreckenden Stützstruktur vor, wodurch die im hinteren Endbereich angeordneten Bodenrollen mit einem entsprechenden Abstand von der Bodenfläche des Behälters angeordnet sind. Dadurch ergibt sich ein größerer Abstand der Bodenfläche von der Standfläche. Da die Stützstrukturen die Fahrzeugbereifung seitlich übergreifen, braucht die Behälterbodenfläche beim Aufladevorgang nur noch geringfügig angehoben zu werden, nämlich lediglich um den entsprechend reduzierten Abstand zwischen der Bodenfläche und dem hinteren Ende des Auflaufrahmens. Durch diese Maßnahme wird der Neigungswinkel beim Aufladen des Behälters erheblich verringert, sodass zugleich auch eine bessere Ausnutzung des Behältervolumens bei der Beladung mit Schütt- und Sperrgut ermöglicht wird.

Weiterhin ist aus der JP 2005 - 138 741 A eine Behälterwechseleinrichtung zum Auf- und Abladen eines eine Bodenfläche mit einer Bodenauflage aufweisenden Behälters bekannt, bei der eine zusätzliche Auflagefläche für das Ladegut zusammen mit einer heckseitigen Wandfläche auf dem Boden abgesetzt und in eine vertikale Position aufgerichtet werden kann, um so die Zugänglichkeit zu verbessern.

Weiterhin beschreibt die US 2002 / 0 146 310 A1 einen Muldenkipper mit vier Faltfüßen, die jeweils vorn links und rechts sowie hinten links und rechts angeordnet sind, wobei jeder der Füße um eine quer verlaufende Schwenkachse beweglich ist, die ihn aus der Faltposition, in der er vollständig an einer der Seitenflächen des Muldenkippers anliegt, in die entfaltete Position bewegen kann, wobei sich der Boden des Muldenkippers in einer relativ großen Höhe über dem Boden befindet, hier etwa die doppelte Höhe des Bodens des Muldenkippers in der Transportposition.

Die GB 1 303 585 A beschreibt eine sogenannte Wechselbrücke, also einen Wechselaufbau mit ausklappbaren Stützfüßen, der von dem Trägerfahrzeug unterfahren werden kann. Unmittelbar hinter der Fahrerkabine des Fahrzeugs als auch am Rahmen sind hakenförmige Festhalteelemente vorgesehen, um den Behälter am Fahrzeug zu fixieren.

Die JP 2011 - 230 371 A bezieht sich auf eine Ladeplattform, beispielsweise für ein mit einem Haken ausgestattetes Transportfahrzeug, der mit der Ladeplattform in Eingriff gebracht werden kann.

Der Erfindung liegt die Aufgabe zugrunde, eine Abrolltransporteinrichtung zu schaffen, die eine problemlose Handhabung gestattet und die zugleich beim Auf- und Abladen des Behälters oder Ladegutträgers einen gegenüber den bisher eingesetzten Abrolltransporteinrichtungen wesentlich reduzierten maximalen Neigungswinkel aufweist. Weiterhin liegt der Erfindung die Aufgabe zugrunde, ein mit einer solchen Abrolltransporteinrichtung bestimmten Behälter oder Ladegutträger insbesondere für neue Verwendungen zu schaffen.

Die erstgenannte Aufgabe wird erfindungsgemäß mit einer Abrolltransporteinrichtung gemäß den Merkmalen des Anspruchs 1 gelöst. Die weitere Ausgestaltung der Erfindung ist den Unteransprüchen zu entnehmen.

Erfindungsgemäß ist also der zumindest eine hintere Standfuß gegenüber der vertikalen Ebene der Behälterrückwand nach hinten verlagert mit einem horizontalen Abstand angeordnet und in unterschiedlichen vertikalen Positionen festlegbar.

Die Erfindung geht dabei von der Erkenntnis aus, dass das Auf- und Abladen des Behälters oder des Ladegutträgers dann mit einem gegenüber den bisher eingesetzten Abrolltransporteinrichtungen wesentlich reduzierten maximalen Neigungswinkel realisierbar ist, wenn vordere und hintere Standfüße vorgesehen sind, auf denen der Behälter oder der Ladegutträger in der Gebrauchsposition ruht und deren Höhe so bemessen ist, dass die Bodenfläche einen deutlichen Abstand gegenüber dem Untergrund bzw. der Standfläche von in der Praxis zumindest 100 cm aufweist. Entgegen dem herrschenden Vorurteil in der Fachwelt lässt sich so erfindungsgemäß nicht nur ein geringer Ladewinkel realisieren, sondern die dabei auf den Behälter wirkenden Kräfte sind aufgrund des wesentlich nach hinten verlagerten Lastpunkts entsprechend der momentanen Kontaktfläche zwischen der Rolle und dem Behälter oder Ladegutträger in der vom Untergrund abhebenden Position weitaus geringer. Der Behälter oder Ladegutträger kann dadurch eine geringere Eigensteifigkeit aufweisen und erlaubt zudem eine sehr stabile und flache Bauweise, die sich vor allem bei Ladegutträgern als sehr nützlich erweist.

Durch den Abstand der Bodenfläche des Behälters von der Standfläche wird zudem die Verwendung von Rangierhilfen möglich, welche den Behälterboden unterfahren bzw. einen jeweiligen Standfuß greifen und beispielsweise auch selbstfahrend, beispielsweise als autonom fahrendes Fahrzeug, ausgeführt sein können. Dabei hat es sich gezeigt, dass der vordere Standfuß bzw. ein vorderes Standfußpaar problemlos und auch unter Beachtung des gewünschten, deutlich reduzierten Ladewinkels des Tragrahmens die Räder des Transportfahrzeugs, die in der Transportposition in Längsrichtung des Transportfahrzeugs zwischen den Ebenen des Front- und Heckbereichs des Behälters oder Ladegutträgers liegen, während des Lade- oder Entladevorgangs ohne Kollisionsgefahr problemlos überwunden werden und sich somit in keinerlei Weise hinderlich auswirken.

Darüber hinaus wirkt sich der reduzierte Ladewinkel auch bei nicht schüttfähigen Gütern vorteilhaft aus, weil dadurch die Belastung sowohl des Behälters als auch des Ladeguts reduziert wird. Der Behälter kann dadurch mit einem geringeren Eigengewicht hergestellt werden, sodass die Ladekapazität des Transportfahrzeugs erhöht ist.

Dabei erweist es sich als vorteilhaft, wenn sich der jeweilige Standfuß mit seiner Standfläche in der Transportposition von der Bodenfläche des Behälters oder des Ladegutträgers bis unterhalb einer durch die Reifenhöhe von der Reifenaufstandsfläche bis zu der gegenüberliegenden Umfangsfläche des Reifens des Fahrzeugreifens bestimmten Ebene, insbesondere von der Bodenfläche bis zu einer Radachse des Fahrzeugreifens, erstreckt. Hierdurch wird eine zugleich komfortable und praxisgerechte Ladehöhe erreicht, aus der beispielsweise schütt-, fließ- oder rieselfähige Güter aufgrund der höherliegenden Ebene der Bodenfläche aus dem Behälter oder Ladegutträger unter dem Einfluss der Schwerkraft zur Verwendung in einer darunterliegenden Ebene bedarfsweise und mengenmäßig einstellbar zugeführt werden kann, ohne dass der gesamte Inhalt des Behälters abgekippt werden muss. Insbesondere ist also die mühsame Entnahme solcher Güter aus dem Behälter in vielen Fällen vermeidbar. Beispielsweise kann der Behälter mittels seiner Standfüße auch über einer Öffnung oder einer Ausnehmung, beispielsweise einer Grube, positioniert werden, sodass das Ladegut durch eine Öffnung in der Bodenfläche des Behälters abgelassen werden bzw. austreten kann. Für andere Verwendungen ist die Heckklappe so auszugestalten, dass sie leicht und sofort mit einem Gabelstapler entnommen werden kann und sich der Laderaum für Stückgut erschließt. Eine andere Ausgestaltungsform wäre es, wenn anstelle der Heckklappe eine andere Vorrichtung eingesetzt wird, um effektiver andere Ladegüter zu transportieren.

Die vorderen und hinteren Standfüße oder die Standfüße der linken und die der rechten Seite des Behälters können auch in unterschiedlichen vertikalen Ebenen einstellbar und festlegbar sein, sodass sich schütt- oder fließfähiges Transportgut in dem tieferliegenden Bereich sammeln können, was sich für viele Verwendungszwecke bereits als vorteilhaft erwiesen hat.

Eine andere besonders Erfolg versprechende Ausgestaltungsform der Erfindung wird hingegen auch dann erreicht, wenn die vorderen Standfüße einerseits und die hinteren Standfüße andererseits derart bemessen sind, dass die Bodenfläche des Behälters oder des Ladegutträgers in der Transportposition einerseits und der Gebrauchsposition andererseits zumindest näherungsweise in derselben horizontalen Ebene liegen. Hierdurch wird der Gebrauch des Behälters in der Gebrauchsposition wesentlich erleichtert, weil der Behälter variabel nutzbar ist und mit verschiedenen Fahrzeugen rangiert oder transportiert werden kann. Beispielsweise kann der erfindungsgemäße Behälter so auch mittels einfacher Plattformwagen transportiert werden, die über keine hierzu bestimmte Greifarmvorrichtung verfügen. Zudem kann der Behälter mit seiner Bodenfläche auch dann in einer horizontalen Ebene positioniert werden, wenn der Untergrund uneben oder sogar stark geneigt ist.

Besonders vorteilhaft erweist sich auch eine Weiterbildung der Erfindung, bei welcher zwei dem Frontbereich zugeordnete vordere Standfüße in der Transportposition auf verschiedenen Seiten lateral des Tragrahmens angeordnet sind. Indem der Tragrahmen in der Transportposition von den Standfüßen seitlich eingeschlossen ist, ergibt sich nicht nur eine hoch belastbare konstruktive Realisierung der Erfindung, sondern auch ein geringer Bauraum für die vorderen Standfüße, die so zudem vor einer Beschädigung aufgrund äußerer Krafteinwirkungen optimal geschützt sind.

Die Standfüße können im Gebrauch unbeweglich an dem Behälter fixiert sein, sodass beim Auf- und Abladen keine zusätzliche Betätigung oder Einstellung des jeweiligen Standfußes erforderlich ist. Eine besonders praxisnahe Abwandlung der Erfindung wird hingegen auch dadurch erreicht, dass der dem Frontbereich und/oder der dem Heckbereich zugeordnete zumindest eine Standfuß in der Gebrauchsposition und in einer hiervon abweichenden Transportposition festlegbar ist, um so einen weiter reduzierten Platzbedarf in der Transportposition des Behälters zu erreichen.

Hierzu kann der Standfuß abnehmbar und in unterschiedlichen Positionen fixierbar ausgeführt sein. Besonders praxisgerecht ist es hingegen, wenn die vorderen Standfüße um eine horizontale Achse quer zu einer Mittellängsachse des Behälters oder des Ladegutträgers und/oder um eine horizontale Achse parallel zu der Mittellängsachse des Behälters oder des Ladegutträgers insbesondere gemeinsam schwenkbeweglich sind, sodass die Standfüße mit geringem Aufwand insbesondere werkzeuglos in die jeweilige Gebrauchs- bzw. Transportposition gebracht werden können. Sind die Behälter abgestellt, können die Standfüße auch beiderseits über die Seitenkonturen des Behälters überstehen.

Dabei kann gemäß einer weiteren vorteilhaften Variante das Gelenk als ein Mehrgelenk ausgeführt sein, um so eine hohe Stabilität des Standfußes bei zugleich geringem Stauraumbedarf zu erreichen.

Vorzugsweise ist zumindest ein Standfuß längeneinstellbar, insbesondere teleskopierbar ausgeführt, um so beispielsweise auch eine Anpassung an unterschiedliche örtliche Gegebenheiten oder die Einstellung einer gewünschten Neigung der Bodenfläche des Behälters oder des Ladegutträgers zu ermöglichen.

Eine besonders praxisgerechte Ausführungsform der Erfindung wird auch dadurch erreicht, dass zumindest ein Standfuß, insbesondere zumindest ein Standfußpaar, mit zumindest einer insbesondere lenkbaren Bodenrolle, einer Walze oder einem Rad ausgestattet ist, um so das Rangieren des Behälters oder des Ladegutträgers in der Gebrauchsposition zu vereinfachen. Diese Rollen oder Räder können beispielsweise auch antreibbar ausgeführt sein, wobei ein integriertes, mit einer eigenen Energieversorgung ausgestattetes Antriebssystem eine schnelle und einfache Positionierung auch ohne weitere Hilfsfahrzeuge ermöglicht.

Indem die Rolle unterhalb der Ebene der Bodenfläche angeordnet ist, lässt sich der erforderliche Neigungswinkel der Bodenfläche beim Auf- und Abladen weiter verringern, wobei beispielsweise auch mehrere Rollen für verschiedene Auflagepunkte der Bodenfläche und/oder eine Höhenverstellung zumindest einer Rolle in besonders vorteilhafter Weise eingesetzt werden können.

Die weitere Aufgabe wird mit einem für eine Abrolltransporteinrichtung bestimmten Behälter oder Ladegutträger gelöst, bei dem der zumindest eine hintere Standfuß gegenüber der vertikalen Ebene der Behälterrückwand nach hinten verlagert mit einem horizontalen Abstand angeordnet und in unterschiedlichen vertikalen Positionen festlegbar ist.. Dadurch wird zugleich der Neigungswinkel beim Auf- und Abrollen des Behälters verändert, insbesondere reduziert, wobei zugleich auch die Biegebelastung des Behälters auf der Rolle verringert ist.

Die Erfindung lässt verschiedene Ausführungsformen zu. Zur weiteren Verdeutlichung ihres Grundprinzips ist eine davon in der Zeichnung dargestellt und wird nachfolgend beschrieben. Diese zeigt jeweils in einer Prinzipdarstellung in
- Fig. 1: eine Seitenansicht eines mit einer erfindungsgemäßen Behälterwechseleinrichtung ausgestatteten Transportfahrzeugs in einer Transportposition;
- Fig. 2a -2c: das in Figur 1 gezeigte Transportfahrzeug beim Abladen eines Behälters;
- Fig. 3: den in Figur 2 gezeigten, auf dem Untergrund abgestellten Behälter in einer Gebrauchsposition;
- Fig. 4: eine Variante des Behälters mit einem klappbaren vorderen Standfuß;
- Fig. 5: den in Figur 3 gezeigten Behälter von vorn;
- Fig. 6: den in Figur 3 gezeigten Behälter von hinten;
- Fig. 7: den in Figur 3 gezeigten Behälter in einer Seitenansicht beim Rangieren mittels eines Gabelstaplers.

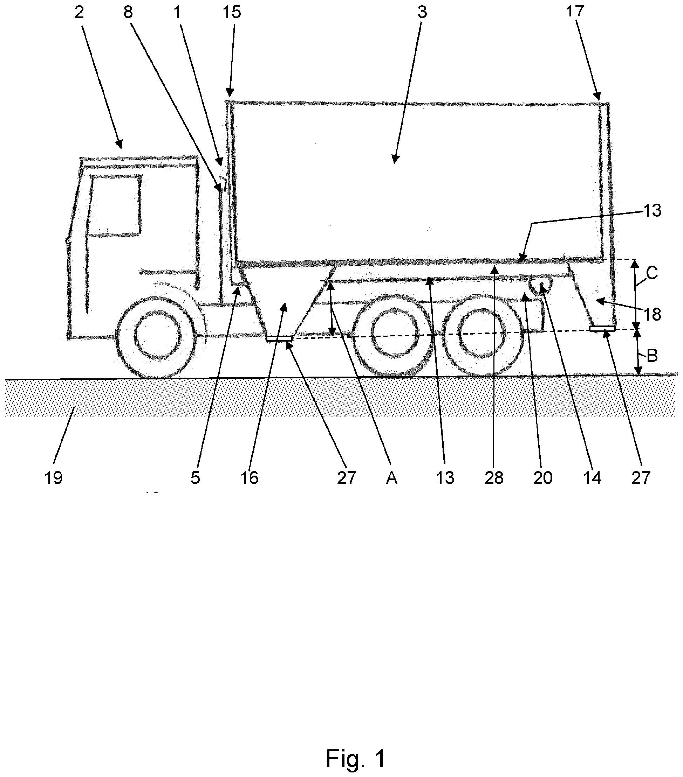

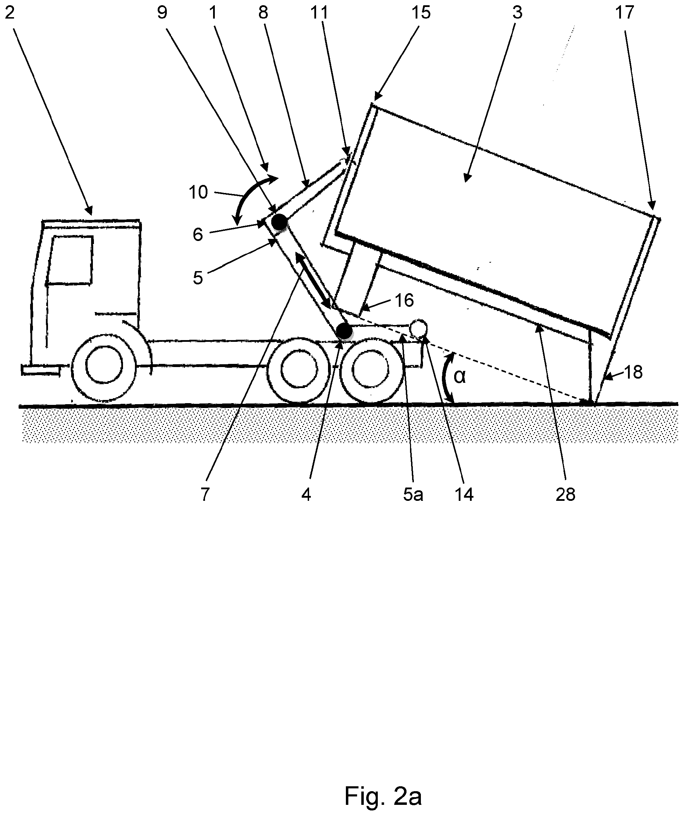

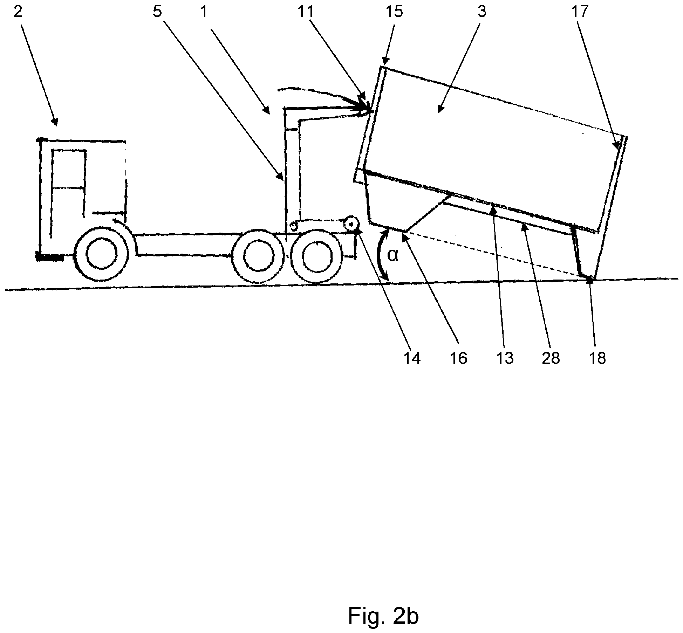

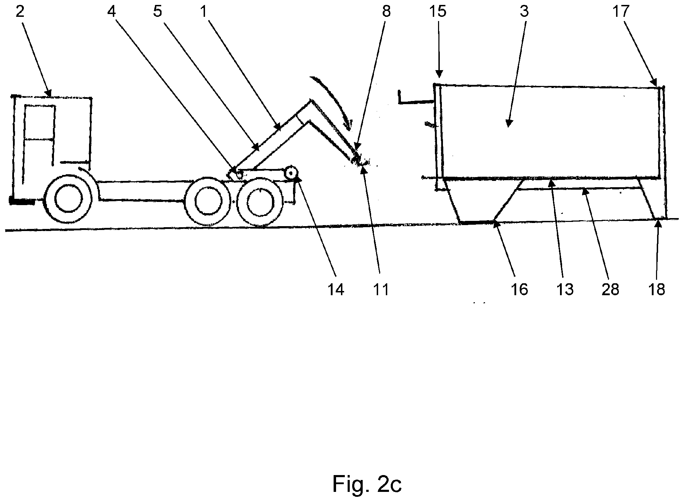

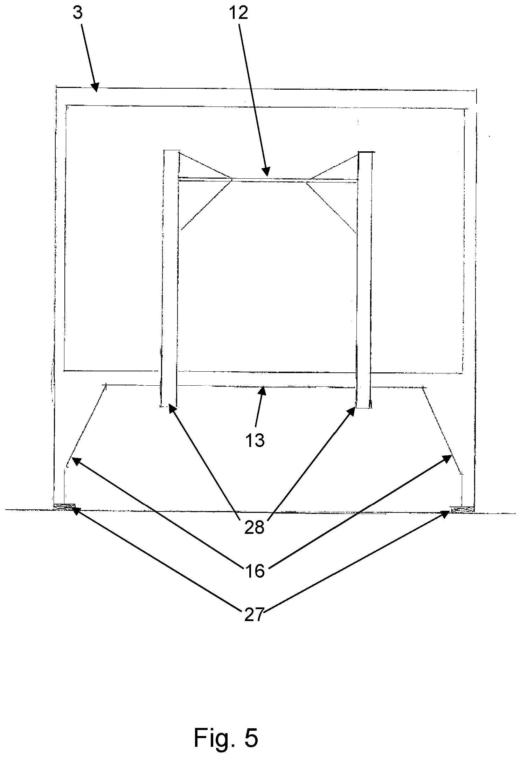

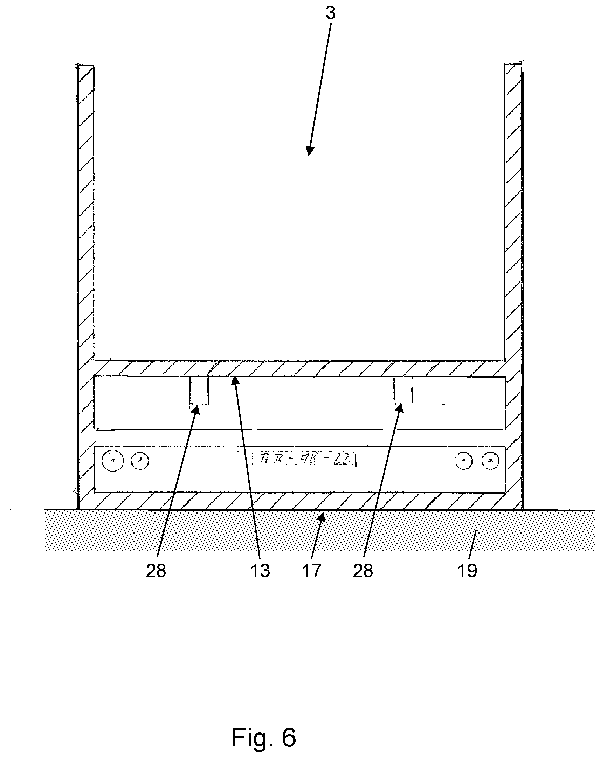

Eine erfindungsgemäße Behälterwechseleinrichtung 1 wird nachstehend anhand der Figuren 1 bis 7 näher erläutert. Die Behälterwechseleinrichtung 1 ist an einem auch als Wechselladerfahrzeug bezeichneten Transportfahrzeug 2 angeordnet und dient dem Auf- und Abladen eines Behälters 3, welcher abweichend von der gezeigten Bauform auch als ein Ladegutträger mit einem darauf insbesondere lösbar angeordneten Behälter ausgeführt sein kann.

Zum Auf- und Abladen des Behälters 3 hat die Behälterwechseleinrichtung 1 einen um eine horizontale Schwenkachse 4 in Pfeilrichtung schwenkbaren Tragrahmen 5, an dem ein Schlitten 6 in Pfeilrichtung 7 translatorisch beweglich ist. Der Schlitten 6 hat einen Greifarm 8, der seinerseits in der dargestellten Variante um eine optionale, horizontale Greifarmschwenkachse 9 in Pfeilrichtung 10 schwenkbar gelagert ist und der mit einem hakenförmigen Kupplungsmittel 11 zur vorübergehenden Fixierung des Greifarms 8 an einem bügelförmigen Haltemittel 12 des Behälters 3 verbunden ist.

In der in Figur 1 gezeigten Transportposition und während einer nicht weiter dargestellten Anfangsphase während des Abladens des Behälters 3 bzw. in einer Endphase beim Aufladen des Behälters 3 liegt der Behälter 3 auf paarweisen Traversen 28 des Behälters 3. Die Traversen 28 verbleiben während des Transports hinten auf Rollen 14.

Wenn sich der Behälter 3 in der Transportposition befindet, ist der Behälter 3 mit dem Tragrahmen 5 verriegelt und der Drehpunkt beim Abkippen entspricht der Rolle 14, während beim Abrollen des Behälters 3 der Drehpunkt der Schwenkachse 4 wirksam ist, was durch eine zweiteilige Ausführung des Tragrahmens 5, 5a erreicht wird.

Der Behälter 3 ist einem Frontbereich 15 mit zwei ein Standfußpaar bildenden vorderen Standfüßen 16 und in einem rückwärtigen Heckbereich 17 mit zwei ein Standfußpaar bildenden hinteren Standfüßen 18 ausgestattet, wobei jeder Standfuß 16, 18 in der auf dem Boden 19 aufliegenden Gebrauchsposition des Behälters 3 mit jeweils einer mit einem übereinstimmenden Abstand A gegenüber der Bodenfläche 13 des Behälters 3 nach unten vorspringenden Bodenauflage 27 ausgestattet ist.

In der auf dem Tragrahmen 5 aufliegenden Transportposition des Behälters 3 schließen die vorderen Standfüße 16 den Tragrahmen 5 beiderseits lateral derart ein, dass die Standfüße 16 gegenüber der Seitenkontur des Transportfahrzeugs 2 nicht hervortreten. Durch die Standfüße 16, 18 erfolgt das Auf- und Abladen des Behälters 3 mit einem gegenüber den bisher eingesetzten Abrolltransporteinrichtungen wesentlich reduzierten maximalen Neigungswinkel α, welcher von dem Abstand A der hinteren Standfüße 18 von der Bodenfläche 13 abhängt.

Hierzu erstrecken sich zumindest die hinteren Standfüße 18 in der Transportposition von der Bodenfläche 13 des Behälters 3 bis unterhalb einer durch die Reifenhöhe der hinteren Fahrzeugreifen bestimmten Ebene 20, insbesondere von der Bodenfläche 13 bis in den Bereich zwischen der Ebene 20 und einer Radachse des Transportfahrzeugs 2. Der Abstand C ist variabel je nach Ausstattung und Nutzung des Behälters 3, wobei der Abstand B zwischen der Bodenauflage 27 und dem Boden 19 ursächlich ist für den Neigungswinkel α beim Aufladen. Der Abstand B entspricht der Höhe, die der Behälter 3 tatsächlich angehoben oder abgesenkt werden muss.

Eine in Längsrichtung des Behälters 3 verlaufende Traverse 28 liegt beim Transport immer auf den Rollen 14 auf. Beim Abkippen von Schüttgut entspricht der Drehpunkt des Tragrahmens 5, 5a den Rollen 14. Für den Tragrahmen 5 liegt beim Abkippen von Schüttgut der Drehpunkt in der Rolle 14.

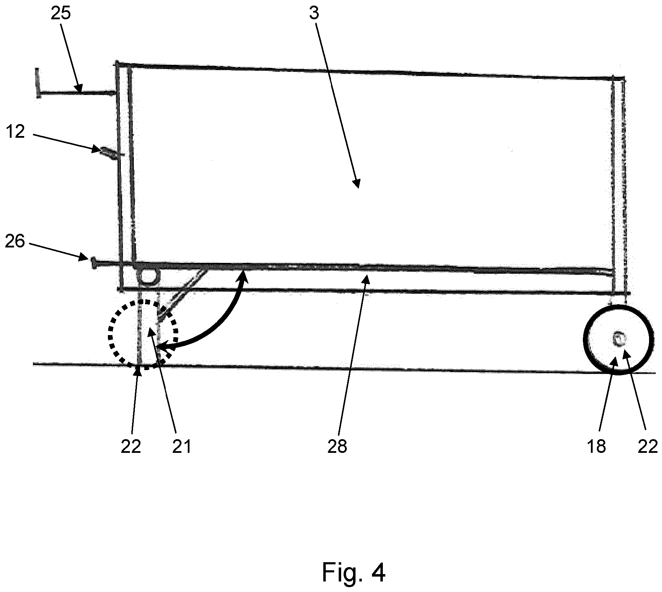

Bei der in Figur 4 gezeigten Variante sind die vorderen Standfüße 21 zwischen der Gebrauchsposition und der Transportposition um eine horizontale Achse quer zu einer Mittellängsachse des Behälters schwenkbeweglich, und sind daher während des Transports vor möglichen Beschädigungen optimal geschützt.

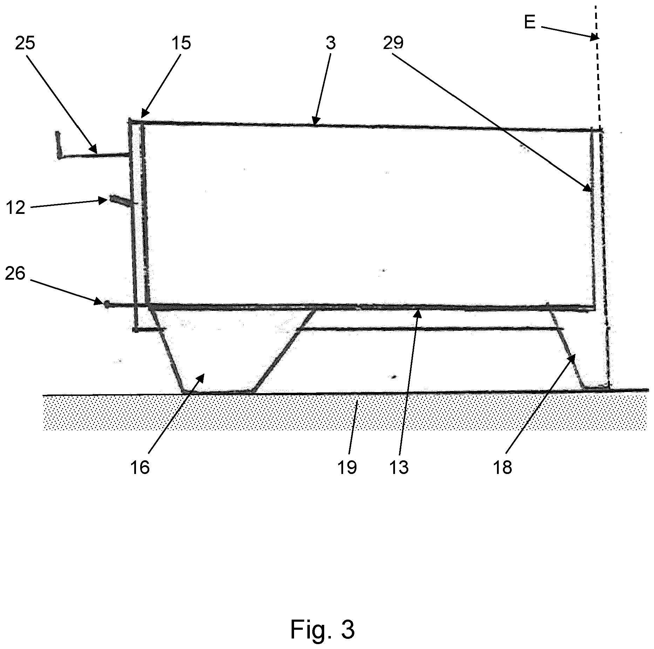

In Figur 3 ist die Position der hinteren Standfüße 18 an dem Behälter 3 gezeigt, die gegenüber einer vertikale Ebene E einer einem Frontbereich 15 abgewandten Behälterrückwand 29 des Behälters 3 nicht nach vorn in Richtung des Frontbereichs 15 beabstandet angeordnet ist.

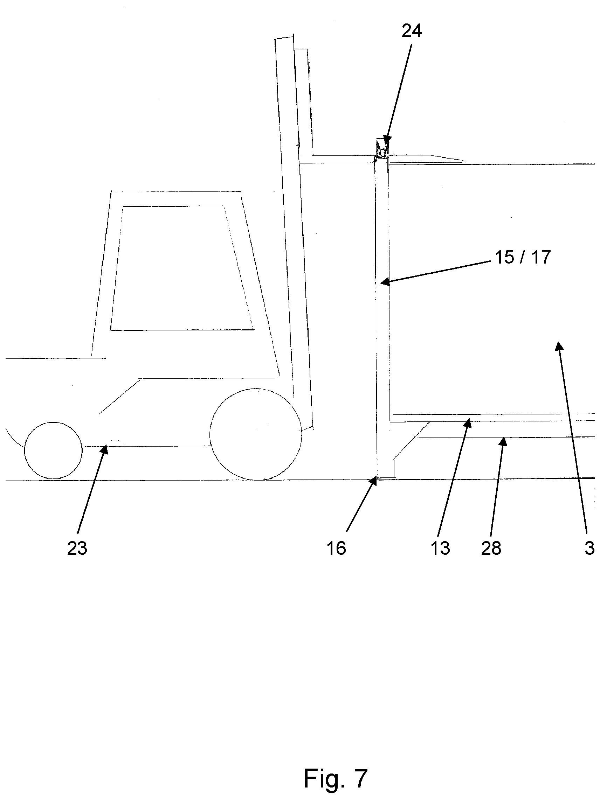

Wie in Figur 4 zu erkennen, sind die hinteren Standfüße 18, und gegebenenfalls auch die vorderen Standfüße 21 jeweils mit einem Rad 22 ausgestattet, sodass sich der Behälter 3, wie in Figur 7 gezeigt, mittels eines Gabelstaplers 23 rangieren lässt, der hierzu in eine Aufnahme 24 im Frontbereich 15 des Behälters 3 eingreift.

Zur einfacheren Handhabung ist der Behälter 3 zusätzlich mit einer Ablage 25 für eine Plane sowie mit einem Fußtritt 26 ausgestattet.

**BEZUGSZEICHENLISTE**

| | | | |
|---|---|---|---|
| 1 | Behälterwechseleinrichtung | 16 | Standfuß |
| 2 | Transportfahrzeug | 17 | Heckbereich |
| 3 | Behälter | 18 | Standfuß |
| 4 | Schwenkachse | 19 | Boden |
| 5, 5a | Tragrahmen | 20 | Ebene |
| 6 | Schlitten | 21 | Standfuß |
| 7 | Pfeilrichtung | 22 | Rad |
| 8 | Greifarm | 23 | Gabelstapler |
| 9 | Greifarmschwenkachse | 24 | Aufnahme |
| 10 | Pfeilrichtung | 25 | Ablage |
| 11 | Kupplungsmittel | 26 | Fußtritt |
| 12 | Haltemittel | 27 | Bodenauflage |
| 13 | Bodenfläche | 28 | Traverse |
| 14 | Rolle | 29 | Behälterrückwand |
| 15 | Frontbereich | A, B, C | Abstand |
| | | α | Neigungswinkel |
| | | E | Ebene |

## Patentansprüche

1. Behälterwechseleinrichtung (1) zum Auf- und Abladen eines eine Bodenfläche (13) mit einer Bodenauflage (27) aufweisenden Behälters (3), wobei die Behälterwechseleinrichtung (1) zumindest eine beim Auf- und Abladen den Behälter (3) oder Ladegutträger zumindest zeitweise stützende Rolle (14) sowie einen um eine Schwenkachse (4) schwenkbaren Tragrahmen (5) für den Behälter (3) oder den Ladegutträger aufweist, an dem ein teleskopierbarer Schlitten (6) und/oder ein beweglicher Greifarm (8) translatorisch beweglich angeordnet ist, der mit einem Kupplungsmittel (11) zur vorübergehenden Fixierung des Greifarms (8) an einem Haltemittel (12) des Behälters (3) oder des Ladegutträgers verbunden ist, wobei der Behälter (3) oder der Ladegutträger in seinem dem Haltemittel (12) zugewandten Frontbereich (15) mit zumindest einem vorderen Standfuß (16, 21) und an seinem die Haltemittel (12) abgewandten rückwärtigen Heckbereich (17) mit zumindest einem hinteren Standfuß (18) ausgestattet ist, und wobei jeder Standfuß (16, 18, 21) in der auf dem Boden (19) aufliegenden Gebrauchsposition mit jeweils einer mit einem Abstand (A) gegenüber der Bodenfläche (13) des Behälters (3) oder des Ladegutträgers vorspringenden Bodenauflage (27) ausgestattet ist, und wobei in einer auf dem Transportfahrzeug (2) aufliegenden Transportposition des Behälters (3) oder des Ladegutträgers der zumindest eine vordere Standfuß (16, 21) lateral des Tragrahmens (5) angeordnet ist und gegenüber der Seitenkontur des Transportfahrzeugs (2) nicht hinaussteht, **dadurch gekennzeichnet, dass** der zumindest eine hintere Standfuß (18) gegenüber der vertikalen Ebene (E) der Behälterrückwand (29) nach hinten verlagert mit einem horizontalen Abstand angeordnet ist und in unterschiedlichen vertikalen Positionen festlegbar ist.

2. Behälterwechseleinrichtung (1) nach Anspruch 1, **dadurch gekennzeichnet, dass** sich der jeweilige Standfuß (16, 18, 21) mit seiner Bodenauflage (27) in der Transportposition von der Bodenfläche (13) des Behälters (3) oder des Ladegutträgers bis unterhalb einer durch die Reifenhöhe eines Fahrzeugreifens des Transportfahrzeugs (2) bestimmten Ebene, insbesondere variabel je nach Verwendung und Ausstattung des Behälters (3) von der Bodenfläche (13) des Behälters (3) oder des Ladegutträgers bis zu einer Radachse oder unterhalb einer Radachse des Fahrzeugreifens erstreckt.

3. Behälterwechseleinrichtung (1) nach Anspruch 1 oder 2, **dadurch gekennzeichnet, dass** die vorderen Standfüße (16, 21) einerseits und die hinteren Standfüße (18) andererseits derart bemessen sind, dass die Bodenfläche (13) des Behälters (3) oder des Ladegutträgers in der Transportposition einerseits und der Gebrauchsposition andererseits zumindest näherungsweise in derselben horizontalen Ebene liegt.

4. Behälterwechseleinrichtung (1) nach zumindest einem der vorhergehenden Ansprüche, **dadurch gekennzeichnet, dass** zwei dem Frontbereich (15) zugeordnete vordere Standfü-ße (16) in der Transportposition auf verschiedenen Seiten lateral des Tragrahmens (5) angeordnet sind.

5. Behälterwechseleinrichtung (1) nach zumindest einem der vorhergehenden Ansprüche, **dadurch gekennzeichnet, dass** der dem Frontbereich (15) zugeordnete zumindest eine Standfuß (16, 21) und/oder der dem Heckbereich (17) zugeordnete zumindest eine Standfuß (18) in der Gebrauchsposition in einer ersten Stellung und in der Transportposition in einer hiervon abweichenden zweiten Stellung festlegbar ist.

6. Behälterwechseleinrichtung (1) nach zumindest einem der vorhergehenden Ansprüche, **dadurch gekennzeichnet, dass** die vorderen Standfüße (16, 21) und/oder der dem Heckbereich (17) zugeordnete zumindest eine Standfuß (18) um eine horizontale Achse quer zu einer Mittellängsachse des Behälters (3) oder des Ladegutträgers und/oder um eine horizontale Achse parallel zu der Mittellängsachse des Behälters (3) oder des Ladegutträgers schwenkbeweglich sind.

7. Behälterwechseleinrichtung (1) nach zumindest einem der vorhergehenden Ansprüche, **dadurch gekennzeichnet, dass** zumindest ein Standfuß (16, 18, 21) längeneinstellbar, insbesondere teleskopierbar, ausgeführt ist.

8. Behälterwechseleinrichtung (1) nach zumindest einem der vorhergehenden Ansprüche, **dadurch gekennzeichnet, dass** zumindest ein Standfuß (16, 18, 21) mit zumindest einer Bodenrolle, einer Walze und/oder einem Rad (22) ausgestattet ist.

9. Behälterwechseleinrichtung (1) nach zumindest einem der vorhergehenden Ansprüche, **dadurch gekennzeichnet, dass** der Drehpunkt beim Kippen des Tragrahmens (5) in Richtung des Radmittelpunkts des Transportfahrzeugs (2) abgesenkt ist.

10. Behälterwechseleinrichtung (1) nach zumindest einem der vorhergehenden Ansprüche, **dadurch gekennzeichnet, dass** eine Heckklappe von dem Behälter (3) werkzeuglos nach oben lösbar oder entnehmbar ist.

11. Behälterwechseleinrichtung (1) nach zumindest einem der vorhergehenden Ansprüche, **dadurch gekennzeichnet, dass** der zumindest eine hinteren Standfuß (18) in einer Position an dem Behälter (3) angeordnet ist, die gegenüber einer vertikalen Ebene (E) einer dem Frontbereich (15) abgewandten Behälterrückwand (29) des Behälters (3) nicht oder nur unwesentlich nach vorn in Richtung des Frontbereichs (15) beabstandet angeordnet ist.

12. Behälter (3) oder Ladegutträger einer Behälterwechseleinrichtung (1) nach zumindest einem der vorhergehenden Ansprüche, wobei der Behälter (3) oder der Ladegutträger in seinem dem Haltemittel (12) zugewandten Frontbereich (15) mit zumindest einem vorderen Standfuß (16, 21) und an seinem die Haltemittel (12) abgewandten rückwärtigen Heckbereich (17) mit zumindest einem hinteren Standfuß (18) ausgestattet ist, und wobei jeder Standfuß (16, 18, 21) in der auf dem Boden (19) aufliegenden Gebrauchsposition mit jeweils einer mit einem Abstand (A) gegenüber der Bodenfläche (13) des Behälters (3) oder des Ladegutträgers vorspringenden Bodenauflage (27) ausgestattet ist, und wobei in einer auf dem Transportfahrzeug (2) aufliegenden Transportposition des Behälters (3) oder des Ladegutträgers zumindest ein vorderer Standfuß (16, 21) lateral des Tragrahmens (5) angeordnet ist und gegenüber der Seitenkontur des Transportfahrzeugs (2) nicht hinaussteht, **dadurch gekennzeichnet, dass** der zumindest eine hintere Standfuß (18) gegenüber der vertikalen Ebene (E) der Behälterrückwand (29) nach hinten verlagert mit einem horizontalen Abstand angeordnet ist und in unterschiedlichen vertikalen Positionen festlegbar ist.

## Claims

1. Container changing device (1) for loading and unloading a container (3) having a bottom surface (13) with a ground contact means (27), wherein the container changing device (1) has at least one roller (14), which at least temporarily supports the container (3) or cargo carrier in the event of loading and unloading, and a carrying frame (5) for the container (3) or the cargo carrier, which carrying frame can be pivoted about a pivot axis (4) and on which a telescopic carriage (6) and/or a movable gripping arm (8) is translationally movable, the carrying frame being connected to a coupling means (11) for temporarily fixing the gripping arm (8) to a retaining means (12) of the container (3) or the cargo carrier, wherein the container (3) or the cargo carrier is equipped in its front region (15), which is in the vicinity of the retaining means (12), with at least one front standing foot (16, 21) and at its rear end region (17), which is remote from the retaining means (12), with at least one rear standing foot (18), and wherein each standing foot (16, 18, 21) in the use position resting on the ground (19) is equipped with a respective ground contact means (27), which projects at a spacing (A) from the bottom surface (13) of the container (3) or the cargo carrier, and wherein, in a transport position of the container (3) or the cargo carrier resting on the transport vehicle (2), the at least one front standing foot (16, 21) is arranged at the side of the carrying frame (5) and does not protrude beyond the side contour of the transport vehicle (2), **characterized in that** the at least one rear standing foot (18) is rearwardly offset, with a horizontal spacing, from the vertical plane (E) of the container rear wall (29) and can be secured in different vertical positions.

2. Container changing device (1) according to Claim 1, **characterized in that** the ground contact portion (27) of the respective standing foot (16, 18, 21) in the transport position extends from the bottom surface (13) of the container (3) or the cargo carrier to below a plane determined by the tyre height of a vehicle tyre of the transport vehicle (2), in particular variably depending on the use and fixtures of the container (3) from the bottom surface (13) of the container (3) or the cargo carrier to a wheel axis or below a wheel axis of the vehicle tyre.

3. Container changing device (1) according to Claim 1 or 2, **characterized in that** both the front standing feet (16, 21) and the rear standing feet (18) are dimensioned such that the bottom surface (13) of the container (3) or the cargo carrier lies at least approximately in the same horizontal plane both in the transport position and in the use position.

4. Container changing device (1) according to at least one of the preceding claims, **characterized in that** two front standing feet (16) assigned to the front region (15) are arranged on different sides of the carrying frame (5) in the transport position.

5. Container changing device (1) according to at least one of the preceding claims, **characterized in that** the at least one standing foot (16, 21) assigned to the front region (15) and/or the at least one standing foot (18) assigned to the rear region (17) can be secured in a first position in the use position and in a second position, different from the first, in the transport position.

6. Container changing device (1) according to at least one of the preceding claims, **characterized in that** the front standing feet (16, 21) and/or the at least one standing foot (18) assigned to the rear region (17) can be pivoted about a horizontal axis transversely to a centre longitudinal axis of the container (3) or the cargo carrier and/or about a horizontal axis parallel to the centre longitudinal axis of the container (3) or the cargo carrier.

7. Container changing device (1) according to at least one of the preceding claims, **characterized in that** at least one standing foot (16, 18, 21) is longitudinally adjustable, in particular telescopic.

8. Container changing device (1) according to at least one of the preceding claims, **characterized in that** at least one standing foot (16, 18, 21) is equipped with at least one bottom roller, caster and/or wheel (22).

9. Container changing device (1) according to at least one of the preceding claims, **characterized in that** the point of rotation is lowered when the carrying frame (5) is being tilted in the direction towards the wheel centre point of the transport vehicle (2).

10. Container changing device (1) according to at least one of the preceding claims, **characterized in that** a tailgate can be upwardly released or removed by the container (3) without tools.

11. Container changing device (1) according to at least one of the preceding claims, **characterized in that** the at least one rear standing foot (18) is arranged in a position on the container (3) which is not at a spacing, or is only at an insignificant spacing, forwards in the direction of the front region (15) from a vertical plane (E) of a container rear wall (29) of the container (3) that is remote from the front region (15).

12. Container (3) or cargo carrier of a container changing device (1) according to at least one of the preceding claims, wherein the container (3) or the cargo carrier is equipped in its front region (15), which is in the vicinity of the retaining means (12), with at least one front standing foot (16, 21) and at its rear end region (17), which is remote from the retaining means (12), with at least one rear standing foot (18), and wherein each standing foot (16, 18, 21) in the use position resting on the ground (19) is equipped with a respective ground contact means (27), which projects at a spacing (A) from the bottom surface (13) of the container (3) or the cargo carrier, and wherein, in a transport position of the container (3) or the cargo carrier resting on the transport vehicle (2), at least one front standing foot (16, 21) is to the side of the carrying frame (5) and does not protrude beyond the side contour of the transport vehicle (2), **characterized in that** the at least one rear standing foot (18) is rearwardly offset, with a horizontal spacing, from the vertical plane (E) of the container rear wall (29) and can be secured in different vertical positions.

## Revendications

1. Dispositif de changement de conteneur (1) destiné à charger et décharger un conteneur (3) comportant une surface de fond (13) pourvue d'un support de fond (27), le dispositif de changement de conteneur (1) comportant au moins un rouleau (14) qui supporte au moins temporairement le conteneur (3) ou le support de charge pendant le chargement et le déchargement, et un cadre de support (5) qui peut pivoter sur un axe de pivotement (4), qui est destiné au conteneur (3) ou au support de charge, sur lequel un chariot télescopique (6) et/ou un bras de préhension mobile (8) est disposé de manière mobile en translation et qui est relié à un moyen d'accouplement (11) destiné à fixer temporairement le bras de préhension (8) à un moyen de retenue (12) du conteneur (3) ou du support de charge, le conteneur (3) ou le support de charge étant équipé dans sa zone avant (15), dirigée vers le moyen de retenue (12), d'au moins une béquille avant (16, 21) et dans sa zone arrière (17), dirigée à l'opposé du moyen de retenue (12), d'au moins une béquille arrière (18), et chaque béquille (16, 18, 21) étant équipée, dans la position d'utilisation en appui sur le sol (19), d'un appui au sol (27) qui fait saillie à une distance (A) de la surface de fond (13) du conteneur (3) ou du support de charge, et dans une position de transport du conteneur (3) ou du support de charge, en appui sur le véhicule de transport (2), au moins une béquille avant (16, 21) étant disposée latéralement au cadre de support (5) et ne faisant pas saillie du contour latéral du véhicule de transport (2), **caractérisé en ce que** l'au moins une béquille arrière (18) est disposée à une distance horizontale en étant décalée vers l'arrière du plan vertical (E) de la paroi de conteneur arrière (29) et peut être fixée dans différentes positions verticales.

2. Dispositif de changement de conteneur (1) selon la revendication 1, **caractérisé en ce que** la béquille respective (16, 18, 21) s'étend, avec son appui au sol (27) dans la position de transport, de la surface de fond (13) du conteneur (3) ou du support de charge jusqu'au-dessous d'un niveau déterminé par la hauteur d'un pneumatique du véhicule de transport (2), notamment de manière variable en fonction de l'utilisation et de l'équipement du conteneur (3) de la surface de fond (13) du conteneur (3) ou du support de charge jusqu'à un essieu de roue ou au-dessous d'un essieu de roue du pneumatique de véhicule.

3. Dispositif de changement de conteneur (1) selon la revendication 1 ou 2, **caractérisé en ce que** les béquilles avant (16, 21) d'une part et les béquilles arrière (18) d'autre part sont dimensionnées de manière à ce que la surface de fond (13) du conteneur (3) ou du support de charge dans la position de transport d'une part et dans la position d'utilisation d'autre part soient situées au moins approximativement dans le même plan horizontal.

4. Dispositif de changement de conteneur (1) selon l'une au moins des revendications précédentes, **caractérisé en ce que** deux béquilles avant (16) associées à la zone avant (15) sont disposées dans la position de transport sur des côtés différents latéralement au cadre de support (5).

5. Dispositif de changement de conteneur (1) selon l'une au moins des revendications précédentes, **caractérisé en ce que** l'au moins une béquille (16, 21), associée à la zone avant (15), et/ou l'au moins une béquille (18), associée à la zone arrière (17), peuvent être fixées dans une première position dans la position d'utilisation et dans une deuxième position, différente de la première, dans la position de transport.

6. Dispositif de changement de conteneur (1) selon l'une au moins des revendications précédentes, **caractérisé en ce que** les béquilles avant (16, 21) et/ou l'au moins une béquille (18), associée à la zone arrière (17), peuvent pivoter sur un axe horizontal transversalement à un axe longitudinal médian du conteneur (3) ou du support de charge et/ou sur un axe horizontal parallèlement à l'axe longitudinal médian du conteneur (3) ou du support de charge.

7. Dispositif de changement de conteneur (1) selon l'une au moins des revendications précédentes, **caractérisé en ce qu'**au moins une béquille (16, 18, 21) est conçue pour être réglable en longueur, notamment télescopique.

8. Dispositif de changement de conteneur (1) selon l'une au moins des revendications précédentes, **caractérisé en ce qu'**au moins une béquille (16, 18, 21) est équipée d'au moins une roulette, un rouleau et/ou une roue (22).

9. Dispositif de changement de conteneur (1) selon l'une au moins des revendications précédentes, **caractérisé en ce que** le point de rotation est abaissé en direction du centre de roue du véhicule de transport (2) lorsque le cadre de support (5) est incliné.

10. Dispositif de changement de conteneur (1) selon l'une au moins des revendications précédentes, **caractérisé en ce qu'**un hayon peut être détaché ou retiré du conteneur (3) vers le haut sans outil.

11. Dispositif de changement de conteneur (1) selon l'une au moins des revendications précédentes, **caractérisé en ce que** l'au moins une béquille arrière (18) est disposée sur le conteneur (3) dans une position qui n'est pas disposée à distance, ou seulement dans une faible mesure, vers l'avant en direction de la zone avant (15) par rapport à un plan vertical (E) d'une paroi arrière (29) du conteneur (3) qui est opposée à la zone avant (15).

12. Conteneur (3) ou support de charge d'un dispositif de changement de conteneur (1) selon l'une au moins des revendications précédentes, le conteneur (3) ou le support de charge étant équipé dans sa zone avant (15), dirigée vers le moyen de retenue (12), d'au moins une béquille avant (16, 21) et dans sa zone arrière (17), dirigée à l'opposé du moyen de retenue (12), d'au moins une béquille arrière (18), et chaque béquille (16, 18, 21) étant équipée, dans la position d'utilisation en appui sur le sol (19), d'un appui au sol (27) qui fait saillie à une distance (A) de la surface de fond (13) du conteneur (3) ou du support de charge, et dans une position de transport du conteneur (3) ou du support de charge, en appui sur le véhicule de transport (2), au moins une béquille avant (16, 21) étant disposée latéralement au cadre de support (5) et ne faisant pas saillie du contour latéral du véhicule de transport (2), **caractérisé en ce que** l'au moins une béquille arrière (18) est disposée à une distance horizontale en étant décalée vers l'arrière du plan vertical (E) de la paroi de conteneur arrière (29) et peut être fixée dans différentes positions verticales.
